# EUROPEAN PATENT APPLICATION

(11) **EP 4 404 678 A1**
(43) Date of publication of application: **24.07.2024**
(21) Application number: 22869270.3
(22) Date of filing: 14.09.2022
(51) Int. Cl.: H04W 76/10, H04W 92/10

(54) **DATA TRANSMISSION METHOD AND APPARATUS, AND COMMUNICATION DEVICE AND READABLE STORAGE MEDIUM**

(30) Priority: 14.09.2021 CN 202111072654
(71) Applicant: China Mobile Communication Co., Ltd Research Institute, Beijing 100053 (CN); China Mobile Communications Group Co., Ltd., Beijing 100032 (CN)
(72) Inventor: SUN, Junshuai, Beijing 100032 (CN); ZHAO, Yun, Beijing 100032 (CN); LI, Na, Beijing 100032 (CN); WANG, Yingying, Beijing 100032 (CN); LIU, Guangyi, Beijing 100032 (CN)
(74) Representative: Gunzelmann, Rainer
(86) International application number: PCT/CN2022/118767
(87) International publication number: WO 2023/040901

(57) **Abstract**

A data transmission method and apparatus, and a communication device and a readable storage medium are provided, and belong to the field of communication technology. The data transmission method includes: a first functional entity obtains an IP flow, and maps the IP flow to a corresponding AS bearer based on Quality of Service (QoS) characteristics of the IP flow, to transmit the IP flow to a second functional entity. The first functional entity is a user plane functional entity in layer 3 of an Access Stratum (AS) of the sending end; the second functional entity is a functional entity in layer 2 of the AS; the AS bearer is a data packet bearer characterized by QoS.

## Description

### CROSS-REFERENCE TO RELATED APPLICATION

The present application claims priority to the Chinese patent application No. 202111072654.1 filed in China on September 14, 2021, a disclosure of which is incorporated herein by reference in its entirety.

### TECHNICAL FIELD

The present disclosure relates to the field of communication technology, in particular to a data transmission method and apparatus, and a communication device and a readable storage medium.

### BACKGROUND

In related art, data transmission is carried out between layer 3 (Layer 3, L3) and layer 2 of an access stratum (Access Stratum, AS), which is usually based on classifications of data packets service and with respect to transmission of end-to-end data. In this case, due to an inability of service classifications to accurately reflect transmission requirements of the corresponding data packets, it will result in an inability of the data packets to be transmitted on demand.

### SUMMARY

An object of the embodiments of the present disclosure is to provide a data transmission method and apparatus, and a communication device and a readable storage medium to solve a problem in related art where data packets cannot be transmitted on demand.

To solve the aforementioned technical problem, the present disclosure is implemented as follows.

According to a first aspect, the present disclosure provides in some embodiments a data transmission method applied to a sending end, including:
obtaining, by a first functional entity, an IP flow; wherein the first functional entity is a user plane functional entity in layer 3 of an access stratum AS of the sending end;
mapping, by the first functional entity, the IP flow to a corresponding AS bearer based on quality of service QoS characteristics of the IP flow, to transmit the IP flow to a second functional entity; wherein the second functional entity is a functional entity in layer 2 of the AS; the AS bearer is a data packet bearer characterized by QoS.

According to a second aspect, the present disclosure provides in some embodiments a data transmission method applied to a receiving end, including:
obtaining, by a fourth functional entity, a data packet; wherein the fourth functional entity is a functional entity in layer 2 of an AS of the receiving end;
transmitting, by the fourth functional entity, the data packet to a fifth functional entity through an AS bearer corresponding to the data packet; wherein the fifth functional entity is a user plane functional entity in layer 3 of the AS of the receiving end; the AS bearer is a data packet bearer characterized by QoS.

According to a third aspect, the present disclosure provides in some embodiments a data transmission apparatus applied to a sending end, including: a first functional entity and a second functional entity;
wherein the first functional entity is configured to: obtain IP flow, and map the IP flow to a corresponding AS bearer based on QoS characteristics of the IP flow, to transmit the IP flow to the second functional entity;
wherein the first functional entity is a user plane functional entity in layer 3 of an AS of the sending end, and the second functional entity is a functional entity in layer 2 of the AS; the AS bearer is a data packet bearer characterized by QoS.

According to a fourth aspect, the present disclosure provides in some embodiments a data transmission apparatus applied to a receiving end, including: a fourth functional entity and a fifth functional entity;
the fourth functional entity is configured to: obtain a data packet, and transmit the data packet to the fifth functional entity through an AS bearer corresponding to the data packet;
wherein the fourth functional entity is a functional entity in layer 2 of an AS of the receiving end; the fifth functional entity is a user plane functional entity in layer 3 of the AS of the receiving end; the AS bearer is a data packet bearer characterized by QoS.

According to a fifth aspect, the present disclosure provides in some embodiments a communication device, including a processor, a memory, and a processor-executable program or instruction stored in the memory, the processor is configured to execute the program or the instruction to implement the steps of the method according to the first aspect, or the steps of the method according to the second aspect.

According to a sixth aspect, the present disclosure provides in some embodiments a readable storage medium storing therein a program or an instruction, and the program or the instruction is used to be executed by a processor to implement the steps of the method according to the first aspect, or the steps of the method according to the second aspect.

In the embodiments of the present disclosure, after obtaining the IP flow, the first functional entity can map the IP flow to the corresponding AS bearer based on the QoS characteristics of the IP flow, to transmit the IP flow to the second functional entity. The first functional entity is the user plane functional entity in layer 3 of the AS of the sending end, the second functional entity is the functional entity in layer 2 of the AS, and the AS bearer is a data packet bearer characterized by QoS. Therefore, a L3 user plane functional entity can select an appropriate L2 for data transmission according to the transmission requirement of a data packet, thereby achieving flexible connection between L3 and L2 according to the transmission requirements of the data packets, and thus achieving on-demand transmission of the data packets.

### BRIEF DESCRIPTION OF THE DRAWINGS

Fig. 1 is a flow chart of a data transmission method provided in the embodiments of the present disclosure;
Fig. 2 is a schematic diagram of a connection between a L3 User Plane (L3UP) functional entity and L2 in the embodiments of the present disclosure;
Fig. 3 is a flow chart of another data transmission method provided in the embodiments of the present disclosure;
Fig. 4 is a schematic diagram of an end-to-end transmission between a L3 user plane and a MAC layer in the embodiments of the present disclosure;
Fig. 5 is a structural diagram of a data transmission apparatus provided in the embodiments of the present disclosure;
Fig. 6 is a structural diagram of another data transmission apparatus provided in the embodiments of the present disclosure;
Fig. 7 is a structural diagram of a communication device provided in the embodiments of the present disclosure.

### DETAILED DESCRIPTION

The following clearly and completely describes the technical solutions in the embodiments of the present disclosure with reference to the accompanying drawings in the embodiments of the present disclosure. Obviously, the described embodiments are only a part of the embodiments of the present disclosure, rather than all of them. Based on the embodiments of the present disclosure, all other embodiments obtained by those of ordinary skill in the art without creative work shall fall within the protection scope of the present disclosure.

The terms "first", "second", etc. in the disclosed specification and claims are used to distinguish similar objects and not to describe specific order or sequence. It should be understood that the data used in this way can be interchangeable in appropriate cases, so that the embodiments disclosed herein can be implemented in order other than those illustrated or described herein, and the objects distinguished by "first", "second", etc. are usually of the same class, without limiting the number of objects. For example, the first object can be one or multiple. In addition, in the specification and claims, "and/or" represents at least one of the connected objects, and the character "/" generally indicates that the related objects before and after are in an "or" relationship.

In order to solve the problem of the related art where data packets cannot to be transmitted on demand, the embodiments of the present disclosure introduce a User Plane (UP) functional entity in Layer 3 (L3) of an access stratum AS, also known as a L3UP functional entity. The L3 user plane functional entity has data interleaving and de-interleaving functions to support data-packet-oriented processing. The L3 user plane functional entity has a transmission capability for data packets (such as Internet Protocol (IP) packets), which can map and transmit a data packet as a unit, and can map the IP flow within the data packet (i.e. data flow carrying the IP packets) to a corresponding AS bearer and transmit the IP flow to a functional entity in Layer 2 (L2). The AS bearer is a data packet bearer characterized by Quality of Service (QoS). As a result, the L3 user plane functional entity serves as a data anchor of the AS, and can select an appropriate L2 for data transmission according to the transmission requirement of a data packet (such as the QoS parameter requirement), thereby achieving flexible connection between L3 and L2 according to the transmission requirements of the data packets, and thus achieving the on-demand transmission of the data packets.

T data transmission method and apparatus, and a communication device and a readable storage medium provided in the embodiments of the present disclosure are described in details below in conjunction with the accompanying drawings through specific embodiments and their application scenarios.

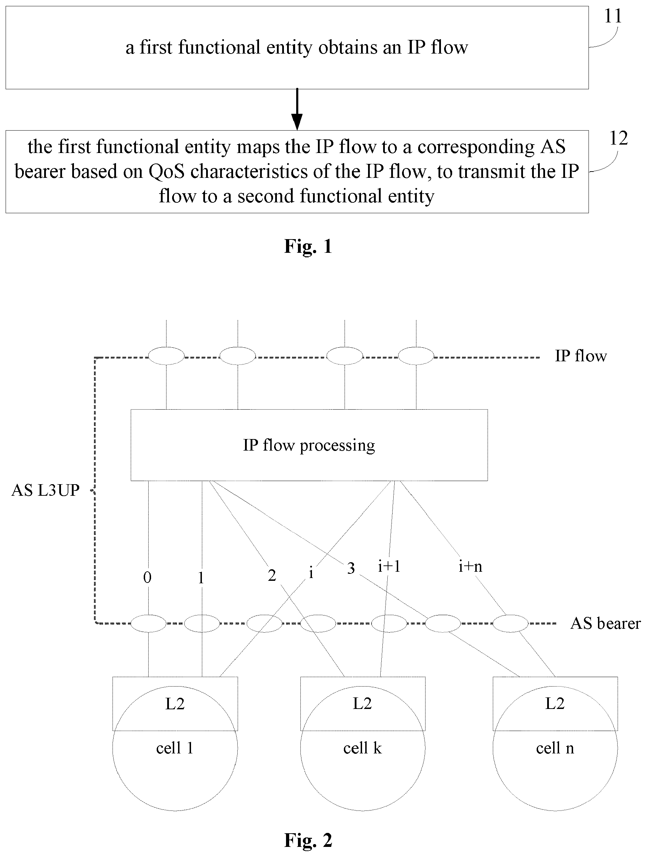

Fig. 1 is a flow chart of a data transmission method provided in the embodiments of the present disclosure. The method is applied to a sending end, the sending end can be a terminal or a network side device, such as a base station. As shown in Fig. 1, the method includes the following steps.

Step 11: a first functional entity obtains IP flow.

In the embodiments, the first functional entity is a user plane functional entity in layer 3 of an AS of the sending end, i.e., a L3 user plane functional entity. The IP flow may be understood as a data flow carrying a data packet such as an IP packet.

In some embodiments, the L3 user plane functional entity can receive the IP flow from Non Access Stratum (NAS) or a core network, that is, the L3 user plane of the AS may directly interact with its upper layer through the IP flow.

Step 12: the first functional entity maps the IP flow to a corresponding AS bearer based on QoS characteristics of the IP flow, to transmit the IP flow to a second functional entity.

In the embodiments, the second functional entity is a functional entity in layer 2 of the AS of the sending end. After obtaining the IP flow, the L3 user plane functional entity of the AS may be subjected to the L3 user plane interweaving and the QoS control processing, and select an appropriate AS bearer according to the QoS requirements, to transmit the IP flow to the functional entity in L2.

The AS bearer is a bearer that connects the L3 user plane functional entity with the functional entity in L2, representing a data packet bearer characterized by QoS. In this way, when using the AS bearer to achieve the data transmission between L3 and L2, the classification can be based on the QoS requirement of the data packets, rather than based on the services of the data packet. Therefore, a class of data packets with the same QoS requirement (such as belonging to different services) can be carried to the same AS bearer for transmission, thereby achieving the on-demand transmission of the data packets.

In the data transmission method of the embodiments of the present disclosure, after obtaining the IP flow, the first functional entity can map the IP flow to the corresponding AS bearer based on the QoS characteristics of the IP flow, to transmit the IP flow to the second functional entity. The first functional entity is a user plane functional entity in layer 3 of an AS of the sending end, the second functional entity is a functional entity in layer 2 of the AS, and the AS bearer is a data packet bearer characterized by the QoS. Therefore, the L3 user plane functional entity can select an appropriate L2 for data transmission according to the transmission requirement of the data packet, thereby achieving flexible connection between L3 and L2 according to the transmission requirement of the data packets, and thus achieving the on-demand transmission of the data packets, and reducing the overhead of the data packets.

In the embodiments of the present disclosure, the first functional entity, i.e., the L3 user plane functional entity, may process the IP flow in two ways: 1) mapping the entire IP flow to one or more AS bearers of L2 in units of IP flow, such that the same IP flow can be mapped to different AS bearers simultaneously; 2) mapping the IP packets in the IP flow to one or more AS bearers of L2 in units of each IP packet in the IP flow based on the QoS characteristics of each IP packet, such that the IP packets in the IP flow can be mapped to different AS bearers or a same AS bearer simultaneously.

Optionally, the mapping the IP flow to the corresponding AS bearer based on the QoS characteristics of the IP flow to transmit the IP flow to the second functional entity may include that: the first functional entity maps the IP packets in the IP flow to the corresponding AS bearers based on the QoS characteristics of the IP packets in the IP flow to transmit the IP packets to the second functional entity. Accordingly, it may achieve a bearer mapping with a single IP packet as a unit, thereby meeting the on-demand transmission of the data packets at a finer granularity.

In some embodiments, the transmission of each IP flow to L2 is mapped to one or more AS bearers based on the QoS characteristics of each data packet (such as the IP packet) or the IP flow.

In some embodiments, the IP flow carried on an AS bearer can belong to the same Protocol data unit (PDU) session or belong to different PDU sessions.

In some embodiments, the IP flow belongs to one PDU session of the terminal. The AS bearer can simultaneously carry the data packets (such as the IP packets) in one or more IP flows of one PDU session, and can also simultaneously carry data packets (such as IP packets) in multiple IP flows of multiple PDU sessions.

Optionally, a corresponding relationship between the first functional entity and the second functional entity is of one-to-one correspondence or one-to-multiple correspondence. For example, if the sending end is a terminal, the functional entity in L2 corresponding to the L3 user plane functional entity is within a same terminal body. For another example, if the sending end is a base station, the functional entity in L2 corresponding to the L3 user plane functional entity can be in the same base station or in different base stations, to enable the L3 user plane at the network side to be connected with the terminal through multiple connections.

For example, as shown in Fig. 2, the L3 user plane functional entity can process the received IP flow, which can be in units of IP flow or IP Packet. The L3 user plane functional entity can select the appropriate AS bearer for the IP flows based on the QoS requirement, to transmit the IP flow to the functional entity in L2. One IP flow can be mapped to one or more AS bearers simultaneously. As shown in Fig. 2, the connection of the L3 user plane and L2 may be one of different connections, including the one-to-one connection (as shown by "0" in Fig. 2), and one-to-multiple connection (as shown by "1", "2", and "3" in Fig. 2). At the network side, the connection of the terminal between the L3 user plane and L2 can be within the same base station or different base stations. As shown in Fig. 2, the cells in Fig. 2 (such as cell 1 (cell₁), cell k (cellₖ), cell n (cell")) represent transmission channels that can provide wireless air interface coverage, including the L2 protocol stack, the physical layer channel, and corresponding functions. When the terminal moves and causes changes in the cell, link handover is required.

In the embodiments of the present disclosure, L2 can be of a traditional L2 protocol stack, including protocol sublayers such as Service Data Adaptation Protocol (SDAP), Packet Data Convergence Protocol (PDCP), Radio Link Control, RLC), and Medium Access Control (MAC), or L2 can only include a MAC protocol sublayer (also called MAC layer).

Optionally, the second functional entity mentioned above can be a MAC layer entity in L2.

In some embodiments, when L2 only includes the MAC layer, the L3 user plane may directly connect to the MAC layer.

In some embodiments, when L2 includes the protocol sublayers other than the MAC layer, the L3 user plane can connect to the SDAP layer, and define Transparent Modes (TMs) at respective protocol sublayers such as the SDAP layer, the PDCP layer, and the RLC layer. That is, when a data packet passes through the SDAP/PDCP/RLC, each protocol sublayer does not process the data packet; instead, it transmits the data packet directly to its lower layer or upper layer. Logically, it is also equivalent to directly connecting the L3 user plane to the MAC layer.

Optionally, mapping the IP flow to the corresponding AS bearer based on the QoS characteristics of the IP flow, to transmit the IP flow to the second functional entity can include: the first functional entity mapping the IP flow to the corresponding AS bearer based on the QoS characteristics of the IP flow to transmit the IP flow to a third functional entity, and the third functional entity transmitting the IP flow to the MAC layer entity. The third functional entity is one of functional entities in layer 2 that are other than the MAC layer entity, such as the SDAP layer entity.

Furthermore, after receiving a MAC Service Data Unit (SDU) on the AS bearer, the MAC layer entity can first establish a corresponding MAC Protocol Data Unit (PDU) based on the QoS parameter of the AS bearer. The MAC PDU includes an identification of the AS bearer, so that the receiving end can determine the corresponding AS bearer based on the identification. Then, the MAC PDU is transmitted to the MAC layer entity of the receiving end. As a result, it is able to achieve the on-demand transmission of the data packets over the air interface with low latency and high reliability.

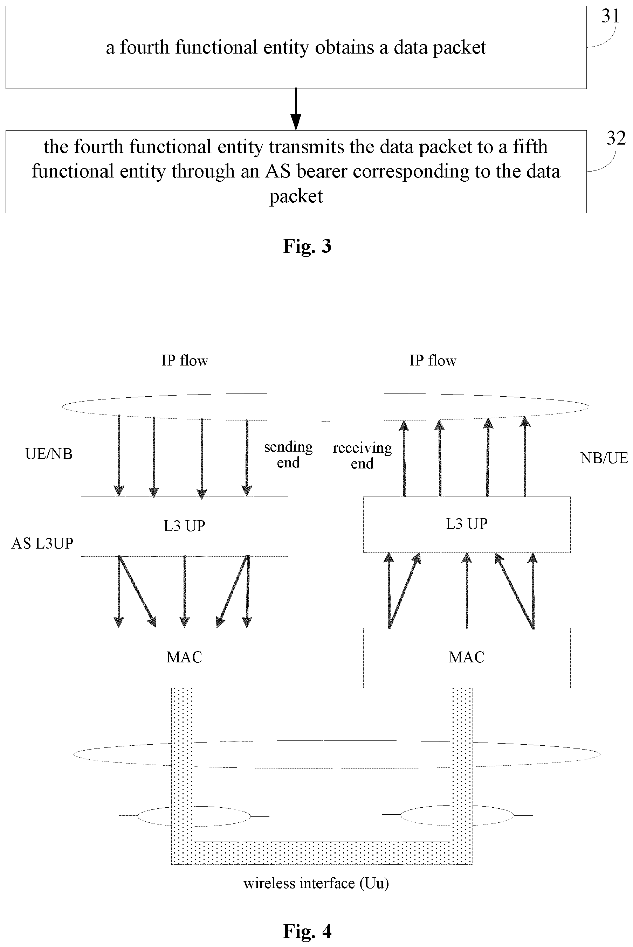

Fig. 3 is a flow chart of a data transmission method provided in the embodiments of the present disclosure. The method is applied to a receiving end, the receiving end can be a terminal, or a network side device such as a base station. For example, when the sending end is the terminal, the receiving end is the base station. Alternatively, when the sending end is the base station, the receiving end is the terminal. As shown in Fig. 3, the method includes the following steps.

Step 31: a fourth functional entity obtains a data packet.

In the embodiments, the fourth functional entity is a functional entity in layer 2 of an AS of the receiving end.

Step 32: the fourth functional entity transmits the data packet to a fifth functional entity through an AS bearer corresponding to the data packet.

In the embodiments, the fifth functional entity is a user plane functional entity in layer 3 of the AS of the receiving end, i.e., the L3 user plane functional entity. The AS bearer is a data packet bearer characterized by QoS. After receiving the data packet from L2 through the AS bearer, the L3 user plane functional entity of the AS can determine a corresponding IP flow of the data packet through de-interleaving. Then, the L3 user plane functional entity sorts the data packet in the IP flow and transmits the sorted data packets to the upper layer.

In the data transmission method of the embodiments of the present disclosure, after obtaining the data packet, the fourth functional entity can transmit the data packet to the fifth functional entity through the AS bearer corresponding to the data packet. The fourth functional entity is a functional entity in layer 2 of an AS of the receiving end, and the fifth functional entity is a user plane functional entity in layer 3 of the AS of the receiving end. The AS bearer is a data packet bearer characterized by QoS. As a result, the L3 user plane functional entity can receive data from L2 according to the transmission requirement of data packet, thereby achieving flexible connection between L3 and L2 according to the transmission requirement of data packets, thereby achieving the on-demand transmission of the data packets and reducing the overhead of the data packets.

Optionally, after receiving the data packet, the L3 user plane function entity of the AS can analyze the data packet and obtain the IP flow corresponding to each IP packet in the data packet. Then, according to the order of each IP packet in the IP flow, the L3 user plane function entity maps each IP packet to the corresponding IP flow and transmits the IP packet to the upper layer.

Optionally, the fourth functional entity mentioned above can be a MAC layer entity. In this case, the MAC layer entity can receive a MAC PDU from the MAC layer entity of the sending end. The MAC PDU includes an identification of the AS bearer. Then, the MAC layer entity analyzes the MAC PDU to obtain the MAC SDU and the corresponding AS bearer, and transmits the MAC SDU to the L3 user plane functional entity through the AS bearer corresponding to the MAC SDU. In this way, based on an end-to-end data transmission between the L3 user plane and the MAC layer, it is possible to achieve the on-demand transmission of the data packets over the air interface with low latency and high reliability.

In the following, it describes the end-to-end transmission between the L3 user plane and the MAC layer in the embodiments of the present disclosure with reference to Fig. 4.

In the embodiments of the present disclosure, the sending end can be a terminal or a base station NB, and correspondingly, the receiving can be a base station NB or a terminal.

For the sending end, as shown in Fig. 4, it can directly transmits corresponding IP packets from a NAS or a core network to an AS or a base station through the IP flow, that is, the L3 user plane of the AS interacts directly with its upper layer through the IP flow. Firstly, the L3 user plane functional entity of the sending end can use the interleaving function to map the IP packets of the IP flow to different AS bearers, to transmit the IP packets to the MAC layer entity. Secondly, upon receiving the MAC SDU on the AS bearer, the MAC layer entity of the sending end can determine a scheduling strategy for the MAC SDU based on a QoS guarantee indicator of the AS bearer, the scheduling strategy including a resource allocation mode and a mode for establishing the MAC PDU (such as whether to divide the MAC SDU into multiple segments for transmission, whether to establish a MAC PDU by the RB data packets of high and low priorities), and a Hybrid Automatic Repeat reQuest (HARQ) mode or a HARQ process mode, as well as number of HARQ processes, a physical layer channel parameter such as bit rate, encoding, modulation scheme, and establish the MAC PDU. The established MAC PDU carries the AS bearer ID. Then, the MAC layer entity of the sending end transmits the established MAC PDU to the MAC layer entity of the receiving end through a Uu interface.

For the receiving end, as shown in Fig. 4, firstly, upon receiving the MAC PDU, the MAC layer entity of the receiving end can analyze the MAC PDU to obtain the MAC SDU and its corresponding AS bearer, and transmit the MAC SDU to the L3 user plane functional entity through its corresponding AS bearer. Then, the L3 user plane functional entity of the receiving end receives data packets through different AS bearers, analyzes the L3 user plane PDU to obtain the IP flow corresponding to each IP packet, and sorts the IP packets on each IP flow, and transmits the IP packets in order to the upper layer. It should be noted that in Fig. 4, the UE represents the User Equipment, and the NB represents the Node B, which may be understood as a base station.

It should be noted that the data transmission method provided in the embodiments of the present disclosure can be executed by a data transmission apparatus or a control module configured to execute the data transmission method in the data transmission apparatus. In the embodiments of the present disclosure, the data transmission apparatus is described by taking the data transmission method executed by the data transmission apparatus as an example.

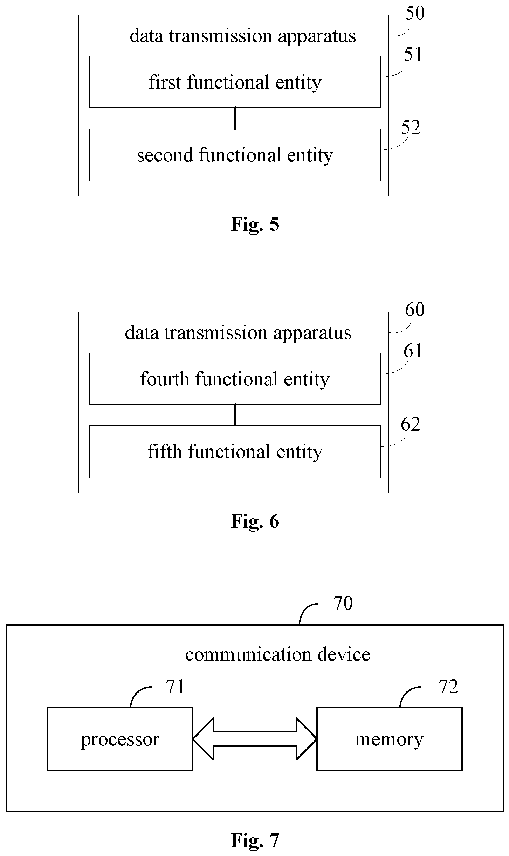

Fig. 5 is a structural diagram of a data transmission apparatus provided in the embodiments of the present disclosure. The apparatus is applied to a sending end, the sending end can be a terminal, or a network side device such as a base station. As shown in Fig. 5, the data transmission apparatus 50 includes: a first functional entity 51 and a second functional entity 52.

The first functional entity 51 is configured to: obtain IP flow, map the IP flow to a corresponding AS bearer to transmit the IP flow to the second functional entity 52 based on QoS characteristics of the IP flow. The first functional entity 51 is a user plane functional entity in layer 3 of the AS of the sending end. The second functional entity 52 is a functional entity in layer 2 of the AS. The AS bearer is a data packet bearer characterized by QoS.

Optionally, the first functional entity 51 is further configured to: map IP packets in the IP flow to the corresponding AS bearers based on the QoS characteristics of the IP packets in the IP flow, to transmit the IP packets to the second functional entity.

Optionally, the second functional entity 52 is a MAC layer entity.

Optionally, the first functional entity 51 is further configured to: map the IP flow to the corresponding AS bearer based on the QoS characteristics of the IP flow, to transmit the IP flow to a third functional entity, the third functional entity then transmits the IP flow to the MAC layer entity; wherein the third functional entity is one of functional entities in layer 2 that are other than the MAC layer entity.

Optionally, the MAC layer entity is configured to: after receiving a MAC SDU on the AS bearer, establish a corresponding MAC PDU based on QoS parameters of the AS bearer, to transmit the MAC PDU to a MAC layer entity of a receiving end. The MAC PDU includes an identification of the AS bearer.

Optionally, the IP flows carried on one AS bearer belong to a same PDU session, or the IP flows carried on one AS bearer belong to different PDU sessions; and/or
a corresponding relationship between the first functional entity 51 and the second functional entity 52 is of one-to-one correspondence or one-to-multiple correspondence.

The data transmission apparatus 50 of the embodiments of the present disclosure can implement the various processes of the method embodiments shown in Fig. 1 above, and can achieve the same technical effect. To avoid repetition, it will not be repeated herein.

Fig. 6 is a structural diagram of a data transmission apparatus provided in the embodiments of the present disclosure. The apparatus is applied to a receiving end, the receiving end can be a terminal, or a network side device such as a base station. As shown in Fig. 6, the data transmission apparatus 60 includes: a fourth functional entity 61 and a fifth functional entity 62.

The fourth functional entity 61 is configured to obtain a data packet, transmit the data packet to the fifth functional entity 62 through an AS bearer corresponding to the data packet. The fourth functional entity 61 is a functional entity in layer 2 of the AS of the receiving end. The fifth functional entity 62 is a user plane functional entity in layer 3 of the AS of the receiving end; the AS bearer is a data packet bearer characterized by QoS.

Optionally, the fifth functional entity 62 is configured to: after receiving the data packet, analyze the data packet to obtain the IP flow corresponding to each IP packet in the data packet, and map each IP packet to the corresponding IP flow and transmit the IP packets to an upper layer according to the order of each IP packet in the IP flow.

Optionally, the fourth functional entity 61 is a MAC layer entity. The MAC layer entity is configured to: receive a MAC PDU from a MAC layer entity of a sending end, analyze the MAC PDU to obtain the MAC SDU and the corresponding AS bearer, and transmit the MAC SDU to the fifth functional entity 62 through the AS bearer corresponding to the MAC SDU. The MAC PDU includes an identification of the AS bearer.

The data transmission apparatus 60 of the embodiments of the present disclosure can implement the various processes of the method embodiments shown in Fig. 1 above, and can achieve the same technical effect. To avoid repetition, it will not be repeated herein.

Optionally, as shown in Fig. 7, the embodiments of the present disclosure further provide a communication device 70, including a processor 71, a memory 72, and a program or instruction stored in the memory 72 and configured to be executed by the processor 71. For example, when the communication device 70 is a sending end, the processor is configured to execute the program or the instruction 71 to implement the various processes of the data transmission method described in the above embodiments, and can achieve the same technical effect. When the communication device 70 is a receiving end, the processor is configured to execute the program or the instruction 71 to implement the various processes of the data transmission method described in the above embodiments, and can achieve the same technical effect. To avoid repetition, it will not be repeated herein.

The embodiments of the present disclosure further provide a readable storage medium, a program or an instruction that is stored on the readable storage medium. The program or the instruction is used to be executed by a processor to implement the various processes of the method embodiments shown in Fig. 1 or Fig. 3, and achieve the same technical effect. To avoid repetition, it will not be repeated herein.

The computer-readable medium includes a permanent, impermanent, movable and immovable medium that may implement information storage in any method or technology. The information may be a computer-readable instruction, a data structure, a module of a program or other data. An example of a storage medium of a computer includes but not limited to a Phase-change RAM (PRAM), a Static RAM (SRAM), a Dynamic RAM (DRAM), an RAM of any other type, an ROM, an Electrically-Erasable Programmable Read-Only Memory (EEPROM), a flash memory or a memory of any other technology, a Compact Disc ROM (CD-ROM), a Digital Versatile Disc (DVD) or another optical memory, a magnetic cassette tape, a magnetic tape/disc storage or another magnetic storage device or any other non-transmission medium that may be configured to store information accessible by a computer device. According to the present disclosure, the computer-readable medium does not include a transitory computer-readable medium (transitory media) like a modulated data signal or a carrier.

It should be noted that the terms "include", "include", and any variant thereof are intended to cover a non-exclusive inclusion. Therefore, in the context of a process, method, object, or device that includes a series of elements, the process, method, object, or device not only includes such elements, but also includes other elements not specified expressly, or may include inherent elements of the process, method, object, or device. Without further limitation, the element defined by a phrase "include one..." does not exclude other same elements in the process, method, article or device which includes the element.

The above embodiments of the present disclosure are for description only and do not represent the advantages or disadvantages of the embodiments.

From the above description of the embodiments, it will be apparent to those skilled in the art that methods in the above embodiments may be implemented by means of software plus a necessary general hardware platform, but may be also implemented by means of hardware, but in many cases the former is a more preferred embodiment. Based on such understanding, an essential part, or a part contributing to the related art, of technical solutions of the present disclosure may be embodied in the form of a software product stored in a storage medium (e.g., ROM/ RAM, a magnetic disk, an optical disk), including instructions for causing a terminal (which may be a mobile phone, a computer, a server, an air conditioner, or a network device) to perform the methods described in the various embodiments of the present disclosure.

The above are merely the preferred embodiments of the present disclosure. It should be noted that, a person skilled in the art may make further improvements and modifications without departing from the principle of the present disclosure, and these improvements and modifications shall also fall within the scope of the present disclosure.

## Claims

1. A data transmission method, applied to a sending end, comprising:
obtaining, by a first functional entity, Internet Protocol (IP) flow; wherein the first functional entity is a user plane functional entity in layer 3 of an Access Stratum (AS) of the sending end;
mapping, by the first functional entity, the IP flow to a corresponding AS bearer based on Quality of Service (QoS) characteristics of the IP flow, to transmit the IP flow to a second functional entity; wherein the second functional entity is a functional entity in layer 2 of the AS; the AS bearer is a data packet bearer **characterized by** QoS.

2. The data transmission method according to claim 1, wherein mapping the IP flow to the corresponding AS bearer based on the QoS characteristics of the IP flow, to transmit the IP flow to the second functional entity comprises:
mapping, by the first functional entity, IP packets in the IP flow to the corresponding AS bearers based on the QoS characteristics of the IP packets in the IP flow, to transmit the IP packets to the second functional entity.

3. The data transmission method according to claim 1, wherein the second functional entity is a Medium Access Control (MAC) layer entity.

4. The data transmission method according to claim 3, wherein mapping the IP flow to the corresponding AS bearer based on the QoS characteristics of the IP flow, to transmit the IP flow to the second functional entity comprises:
mapping, by the first functional entity, the IP flow to the corresponding AS bearer based on the QoS characteristics of the IP flow, to transmit the IP flow to a third functional entity, and transmitting transparently, by the third functional entity, the IP flow to the MAC layer entity; wherein the third functional entity is one of functional entities in layer 2 that are other than the MAC layer entity.

5. The data transmission method according to claim 3, further comprising:
after receiving a MAC Service Data Unit (SDU) on the AS bearer, the MAC layer entity establishes a corresponding MAC Protocol Data Unit (PDU) based on a QoS parameter of the AS bearer; wherein the MAC PDU comprises an identification of the AS bearer;
the MAC layer entity transmits the MAC PDU to a MAC layer entity of a receiving end.

6. The data transmission method according to any one of claims 1 to 5, wherein the IP flows carried on one AS bearer belong to a same PDU session, or the IP flows carried on one AS bearer belong to different PDU sessions;
and/or
a corresponding relationship between the first functional entity and the second functional entity is of one-to-one correspondence or one-to-multiple correspondence.

7. A data transmission method, applied to a receiving end, comprising:
obtaining, by a fourth functional entity, a data packet; wherein the fourth functional entity is a functional entity in layer 2 of an AS of the receiving end;
transmitting, by the fourth functional entity, the data packet to a fifth functional entity through an AS bearer corresponding to the data packet; wherein the fifth functional entity is a user plane functional entity in layer 3 of the AS of the receiving end; the AS bearer is a data packet bearer **characterized by** QoS.

8. The data transmission method according to claim 7, further comprising:
after receiving the data packet, the fifth functional entity analyzes the data packet to obtain the IP flow corresponding to each IP packet in the data packet;
the fifth functional entity maps each IP packet to the corresponding IP flow in an order of each IP packet in the IP flow, to transmit the IP packet to an upper layer.

9. The data transmission method according to claim 7, wherein the fourth functional entity is a MAC layer entity; the obtaining the data packet comprises:
the MAC layer entity receives a MAC PDU from a MAC layer entity of a sending end; wherein the MAC PDU comprises an identification of the AS bearer;
wherein the transmitting the data packet to the fifth functional entity through the AS bearer corresponding to the data packet comprises:
the MAC layer entity analyzes the MAC PDU, to obtain the MAC SDU and the corresponding AS bearer;
the MAC layer entity transmits the MAC SDU to the fifth functional entity through the AS bearer corresponding to the MAC SDU.

10. A data transmission apparatus, applied to a sending end, comprising: a first functional entity and a second functional entity;
wherein the first functional entity is configured to: obtain IP flow, and map the IP flow to a corresponding AS bearer based on QoS characteristics of the IP flow, to transmit the IP flow to the second functional entity;
wherein the first functional entity is a user plane functional entity in layer 3 of an AS of the sending end, the second functional entity is a functional entity in layer 2 of the AS; the AS bearer is a data packet bearer **characterized by** QoS.

11. The apparatus according to claim 10, wherein the first functional entity is further configured to: map IP packets in the IP flow to the corresponding AS bearers based on the QoS characteristics of the IP packets in the IP flow, to transmit the IP packets to the second functional entity.

12. The apparatus according to claim 10, wherein the second functional entity is a MAC layer entity.

13. The apparatus according to claim 12, wherein the first functional entity is further configured to: map the IP flow to the corresponding AS bearer based on the QoS characteristics of the IP flow to transmit the IP flow to a third functional entity, wherein the third functional entity is configured to transmit the IP flow to the MAC layer entity; wherein the third functional entity is one of functional entities in layer 2 that are other than the MAC layer entity.

14. The apparatus according to claim 12, wherein the MAC layer entity is configured to: after receiving a MAC SDU on the AS bearer, establish a corresponding MAC PDU based on a QoS parameter of the AS bearer, to transmit the MAC PDU to a MAC layer entity of a receiving end; wherein the MAC PDU comprises an identification of the AS bearer.

15. The apparatus according to any one of claims 10 to 14, wherein the IP flows carried on one AS bearer belong to a same PDU session, or the IP flows carried on one AS bearer belong to different PDU sessions;
and/or
a corresponding relationship between the first functional entity and the second functional entity is of one-to-one correspondence or one-to-multiple correspondence.

16. A data transmission apparatus, applied to a receiving end, comprising: a fourth functional entity and a fifth functional entity;
wherein the fourth functional entity is configured to: obtain a data packet, and transmit the data packet to the fifth functional entity through an AS bearer corresponding to the data packet;
wherein the fourth functional entity is a functional entity in layer 2 of an AS of the receiving end; the fifth functional entity is a user plane functional entity in layer 3 of the AS of the receiving end; the AS bearer is a data packet bearer **characterized by** QoS.

17. The apparatus according to claim 16, wherein the fifth functional entity is configured to: after receiving the data packet, analyze the data packet to obtain the IP flow corresponding to each IP packet in the data packet, and map each IP packet to the corresponding IP flow to transmit the IP packets to an upper layer in an order of each IP packet in the IP flow.

18. The apparatus according to claim 16, wherein the fourth functional entity is a MAC layer entity;
the MAC layer entity is configured to: receive a MAC PDU from a MAC layer entity of a sending end, and analyze the MAC PDU to obtain the MAC SDU and the corresponding AS bearer, and transmit the MAC SDU to the fifth functional entity through the AS bearer corresponding to the MAC SDU; wherein the MAC PDU comprises an identification of the AS bearer.

19. A communication device, comprising a processor, a memory, and a processor-executable program or instruction stored in the memory, wherein the processor is configured to execute the program or the instruction to implement steps of the data transmission method according to any one of claims 1 to 6, or steps of the data transmission method according to any one of claims 7 to 9.

20. A readable storage medium storing therein a program or an instruction, wherein the program or the instruction is used to be executed by a processor to implement steps of the data transmission method according to any one of claims 1 to 6, or steps of the data transmission method according to any one of claims 7 to 9.
